# EUROPÄISCHE PATENTANMELDUNG

(11) **EP 3 945 070 A1**
(43) Veröffentlichungstag der Anmeldung: **02.02.2022**
(21) Anmeldenummer: 21188355.8
(22) Anmeldetag: 28.07.2021
(51) Int. Cl.: C02F 1/00, B60P 3/32, B60R 15/00, E03B 1/04, E03D 5/00, C02F 1/46, C02F 1/28, C02F 1/44

(54) **SYSTEM ZUR WASSERAUFBEREITUNG FÜR EIN FREIZEITFAHRZEUG**

(30) Priorität: 28.07.2020 DE 102020119931
(71) Anmelder: Erwin Hymer Group SE, 88339 Bad Waldsee (DE)
(72) Erfinder: Buck, Rainer, 88239 Wangen i. Allgäu (DE); Metzler, Marcus, 88339 Bad Waldsee (DE); Dorn, Günter, 88282 Schlier (DE)
(74) Vertreter: Waller, Stefan

(57) **Zusammenfassung**

Die Erfindung betrifft ein System (100) zur Wasseraufbereitung für einen in einem Freizeitfahrzeug angeordneten Wasserkreislauf (140) aufweisend: mindestens einen im Wasserkreislauf (140) angeordneten Wasserverbraucher (110); und eine im Wasserkreislauf (140) angeordnete Wasseraufbereitungsvorrichtung (120); dadurch gekennzeichnet, dass die Wasseraufbereitungsvorrichtung (120) des Systems (100) so ausgeführt und eingerichtet ist, dass das Brauchwasser des mindestens einen Wasserverbrauchers (110) von der Wasseraufbereitungsvorrichtung (120) so aufbereitet wird, dass es für eine erneute Verwendung in dem Wasserkreislauf (140) verwendbar ist.

## Beschreibung

Die Erfindung betrifft ein System zur Wasseraufbereitung für einen in einem Freizeitfahrzeug angeordneten Wasserkreislauf sowie ein solches Freizeitfahrzeug.

Im Stand der Technik sind Freizeitfahrzeuge bekannt. Unter einem Freizeitfahrzeug wird ein Fahrzeug oder Anhänger verstanden, welches oder welcher zumindest ein mobil einsetzbares Element zum Camping aufweist oder zumindest temporär eine Einrichtung zum Campen aufweisen kann. Unter einem Freizeitfahrzeug wird insbesondere ein Campingfahrzeug verstanden. Unter einem Freizeitmobil wird ein motorisiertes Freizeitfahrzeug verstanden. Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil. Ein Wohnwagen kann zum Beispiel alternativ als Caravan oder Campinganhänger bezeichnet werden.

Die Wasseraufbereitung ist die zielgerichtete Veränderung der Wasserqualität. Sie ist ein Teilgebiet der Verfahrenstechnik und umfasst im Wesentlichen zwei Gruppen der Behandlung. Erstens die Entfernung von Stoffen aus dem Wasser, z. B. Reinigung, Entkeimung bzw. Sterilisation, Enteisenung und Entmanganung, Enthärtung, Entsalzung und zweitens die Ergänzung von Stoffen sowie Einstellen von Parametern des Wassers, z. B. Dosierung, Einstellung von pH-Wert, gelösten Ionen und der Leitfähigkeit. Die Wasseraufbereitung ist ein wesentlicher Verfahrensschritt bei der Produktion von Trinkwasser für den menschlichen Gebrauch, d.h. Trinkwasserversorgung. Die Wasseraufbereitung wird auch eingesetzt zur Reinigung von Abwasser, speziell zur Rückgewinnung, d.h. Recycling von z. B. Metallen aus Abwasser.

Im Stand der Technik sind Wasseraufbereitungsanlagen mit elektrochemischen Einheiten und unterschiedlichen Filtersystemen bekannt.

Auf Grund von Gewichts- und Stauraumproblemen kann in Freizeitfahrzeugen nur eine sehr eingeschränkte Menge an Wasser mitgeführt werden. Deshalb ist ausgiebiges Duschen wie man es von zu Hause kennt nicht möglich. Der Einsatz von Geschirrspülmaschinen oder Waschmaschinen ist allenfalls mangelhaft möglich.

Eine Aufgabe der vorliegenden Erfindung liegt darin, den Stand der Technik zu verbessern. Die Erfindung soll es ermöglichen, in einem Freizeitfahrzeug ohne die Notwendigkeit große Tanks mitzuführen zu müssen eine dauerhafte Wasserversorgung bereitzustellen.

Diese Aufgabe wird durch ein System zur Wasseraufbereitung für einen in einem Freizeitfahrzeug angeordneten Wasserkreislauf mit den Merkmalen des unabhängigen Patentanspruchs 1 gelöst. Vorteilhafte Weiterbildungen der Erfindung sind in den Unteransprüchen angegeben.

### Folgendes Begriffliche sei erläutert:

Das Wasser im Wasserkreislauf des Freizeitfahrzeugs kann von einem Benutzer des Freizeitfahrzeugs in einem Wasserverbraucher, zum Beispiel in einer Dusche oder in einem Waschbecken, verwendet werden.

Unter dem Begriff "Brauchwasser" wird dasjenige Wasser verstanden, welches von einem Wasserverbraucher nach dessen Verwendung in den Wasserkreislauf zurückgegeben wird.

Das nach dem Duschvorgang entstandene Brauchwasser kann im Nachgang auch noch zum Spülen, Waschen oder z.B. für die Toilettenspülung verwendet werden.

Unter dem Begriff "Wasseraufbereitung" wird insbesondere verstanden, dass eine Qualität von Brauchwasser so verändert wird, dass das wieder aufbereitete Brauchwasser erneut in dem Wasserkreislauf verwendbar ist. Hierbei soll erwähnt werden, dass die Qualität des wiederaufbereiteten Brauchwassers nicht notwendigerweise Trinkwasserqualität aufweist, jedoch kann. Unter dem Begriff "Wasseraufbereitungsvorrichtung" wird eine Vorrichtung verstanden, welche der "Wasseraufbereitung" dient.

Das erfindungsgemäße System zur Wasseraufbereitung für einen in einem Freizeitfahrzeug angeordneten Wasserkreislauf ermöglicht vorteilhafterweise, dass der Wasserkreislauf mit einer konstanten Wassermenge im Wasserkreislauf wiederholt, insbesondere permanent, verwendet werden kann. Insbesondere wird es vorteilhafterweise möglich, dass Wasserverbraucher wie zum Beispiel eine Dusche, eine Geschirrspülmaschine oder sogar eine Waschmaschine in einem Freizeitfahrzeug mit einem äußerst kleinen Wassertank bzw. Wasservolumen verwendet werden können. Mit dem erfindungsgemäßen System zur Wasseraufbereitung verfügt ein Freizeitfahrzeug somit über eine Autarkie der Frischwasserversorgung. Hierdurch ergibt sich ebenfalls vorteilhafterweise eine Gewichtsreduktion durch den Einsatz kleinerer Frischwassertanks. Ein weiterer Vorteil besteht darin, dass eine Versorgung mit Wasser bzw. eine Entsorgung des Wassers überhaupt nicht mehr bzw. erst sehr spät notwendig wird. Schließlich wird ein mobiler Einsatz von Geschirrspülern und Waschmaschinen ermöglicht.

Bevorzugt ist der Wasserkreislauf der Wasseraufbereitung in einen Gesamtwasser- bzw. Abwasserkreislauf des Freizeitfahrzeuges eingebunden und kann somit mit Kalt- und Warmwasser versorgt werden.

Gemäß einer bevorzugten Ausführungsform ist ein Volumen des Wassers in dem Wasserkreislauf kleiner als 8 Liter, besonders bevorzugt kleiner als 6 Liter. Hierdurch wird vorteilhafterweise erreicht, dass in dem Freizeitfahrzeug lediglich ein sehr kleiner Wassertank mitgeführt werden muss. Dies spart in dem Freizeitfahrzeug Platz und reduziert vorteilhafterweise den Kraftstoffverbrauch.

Eine Duschvorrichtung des Stands der Technik kann eine Durchflussrate zwischen 15 und 17 Litern Wasser pro Minute aufweisen.

Gemäß noch einer weiteren bevorzugten Ausführungsform ist die Wasseraufbereitungsvorrichtung so ausgeführt und eingerichtet, dass das Brauchwasser des mindestens einen Wasserverbrauchers von der Wasseraufbereitungsvorrichtung so aufbereitet wird, dass eine Wasserqualität des Wassers im Wasserkreislauf bei einem Dauerbetrieb des Systems besser als ein vorgegebener Wert ist. Hierbei können insbesondere zwei Stufen der Wasserqualität erwähnt werden. Eine erste Wasserqualität ist dadurch charakterisiert, dass das wiederaufbereitete Wasser zur Verwendung in einem beliebigen Wasserverbraucher wie zum Beispiel einer Dusche, einer Geschirrspülmaschine oder einer Waschmaschine geeignet ist. Eine zweite Wasserqualität entspricht der Trinkwasserqualität. Durch dieses Merkmal wird vorteilhafterweise gewährleistet, dass das System zur Wasseraufbereitung in dem Freizeitfahrzeug dauerhaft verwendet werden kann.

Alternativ oder zusätzlich kann vorgesehen sein, dass wiederaufbereitetes Brauchwasser eines ersten Wasserverbrauchers, welches eine Wasserqualität aufweist, welche schlechter ist als eine Wasserqualität ist, welche für einen zweiten Wasserverbraucher benötigt wird, für den zweiten Wasserverbraucher nicht verwendet wird.

In diesem Fall ist es bevorzugt, dass das wiederaufbereitete Brauchwasser des ersten Wasserverbrauchers, welches eine Wasserqualität aufweist, welche schlechter als eine Wasserqualität ist, welche für einen zweiten Wasserverbraucher benötigt wird, für einen dritten Wasserverbraucher verwendet wird, welcher lediglich eine geringere Wasserqualität benötigt. In diesem Fall kann der erste Wasserverbraucher zum Beispiel eine Dusche und der dritte Wasserverbraucher eine Toilette sein.

Gemäß einer anderen bevorzugten Ausführungsform weist die Wasseraufbereitungsvorrichtung mindestens einen Filter auf. Bevorzugt ist der mindestens eine Filter ausgewählt aus einer Liste bestehend aus: ein Aktivkohlefilter, ein Vorfilter, eine elektrochemische Einheit und ein Ultrafeinfilter. Durch den mindestens einen Filter wird vorteilhafterweise erreicht, dass die Qualität des Brauchwassers so verändert wird, dass das wieder aufbereitete Brauchwasser erneut in dem Wasserkreislauf verwendbar ist.

Gemäß noch einer weiteren bevorzugten Ausführungsform ist der mindestens eine Wasserverbraucher ausgewählt aus einer Liste bestehend aus: Geschirrspülmaschine, Waschmaschine, Dusche, Waschbecken, Spülbecken und Wasserhahn.

Bevorzugt weist das System ferner einen Frischwassertank zur Versorgung des Wasserkreislaufs mit Frischwasser auf, wobei der Frischwassertank mit dem Wasserkreislauf über ein Ventil verbindbar ist. Der Frischwassertank hat bevorzugt Trinkwasserqualität. Indem man Frischwasser des Frischwassertanks in den Wasserkreislauf einspeist, wird vorteilhafterweise erreicht, dass die Qualität des Wassers im Wasserkreislauf erhöht wird. Durch die Einspeisung des Frischwassers wird bevorzugt Wasser schlechterer Qualität aus dem Wasserkreislauf entfernt.

Bevorzugt ist das System so ausgeführt und eingerichtet, dass ein Verlust des Volumens des Wassers des Wasserkreislaufs ausgeglichen wird. Hierdurch wird vorteilhafterweise erreicht, dass das Volumen des Wasserkreislaufs konstant bleibt, so dass jeweils dieselbe Wassermenge dem Benutzer zur Verfügung steht. Der Ausgleich erfolgt bevorzugt aus dem Frischwassertank. Dieses Merkmal kann bevorzugt mithilfe eines Sensors zur Durchflussmessung realisiert werden.

Gemäß einer anderen bevorzugten Ausführungsform ist das System so ausgeführt und eingerichtet, dass das von der Wasseraufbereitungsvorrichtung aufbereitete Wasser aus dem Wasserkreislauf entfernbar ist. Hierbei wird das Wasser bevorzugt in einen Abwassertank, einen Grauwassertank oder einen Fäkaltank bzw. Schwarzwassertank entsorgt.

Grauwasser ist fäkalienfreies, gering verschmutztes Abwasser, wie es etwa beim Duschen, Baden oder Händewaschen anfällt, aber auch aus der Waschmaschine kommt und zur Aufbereitung zu Brauch- bzw. Betriebswasser dienen kann. Küchenabwasser hingegen wird wegen seiner hohen Belastung mit Fetten und Speiseabfällen von dieser Definition ausgenommen.

Hierdurch wird vorteilhafterweise erreicht, dass Wasser von minderwertiger Qualität zu einem wunschgemäßen Zeitpunkt aus dem System entfernt werden kann, wonach das System mit Frischwasser gefüllt werden kann.

Gemäß einer bevorzugten Ausführungsform kann das Wasser aus dem Wasserkreislauf in den Grauwassertank oder über die Toilette in einen Schwarzwassertank entsorgt werden.

Vorteilhaft ist vorgesehen, dass das Wasser über die Wasseraufbereitungsvorrichtung in Wasserkreisläufe mit verschiedenen Wasserverbrauchern jeweils getrennt geleitet werden kann.

Dadurch können vorteilhaft mit einer einzigen Wasseraufbereitungsvorrichtung mehrere Wasserverbraucher unter sparsamer Nutzung des Wassers versorgt werden. Beispielsweise können durch entsprechende Leitungen und Ventile sowie deren Schaltung erreicht werden, dass mit der Wasseraufbereitungsvorrichtung eine Dusche im Kreislaufbetrieb betrieben werden kann und bei entsprechender anderer Schaltung ein Geschirrspüler oder jeweils getrennt eine Waschmaschine oder auch ein Spülbecken.

Das oben beschriebene System zur Wasseraufbereitung kann anstatt in einem Freizeitfahrzeug alternativ in einem Tiny House, einem Small House oder auch in einem Privathaushalt verwendet werden. Unter einem Tiny House wird ein Kleinhaus verstanden, welches zumeist zwischen 15 und 45 m² Wohnfläche aufweist. Bei einem Small Homes kann die Wohnfläche bis zu 90 m² betragen.

Die Wasseraufbereitungsanlange kann auch verunreinigtes Wasser, das in den Frischwassertank gelangt ist, reinigen, so dass es dort länger haltbar ist. Die Anlage stellt ebenfalls die Qualität und Reinheit des Frischwassers sicher. Verunreinigtes Trinkwasser kann ebenfalls gereinigt werden.

In einem weiteren Aspekt wird die Aufgabe der Erfindung gelöst durch ein Freizeitfahrzeug mit dem oben beschriebenen System zur Wasseraufbereitung für den in dem Freizeitfahrzeug angeordneten Wasserkreislauf.

Ein Ausführungsbeispiel der Erfindung ist in der Zeichnung dargestellt und wird in der nachfolgenden Beschreibung näher erläutert.

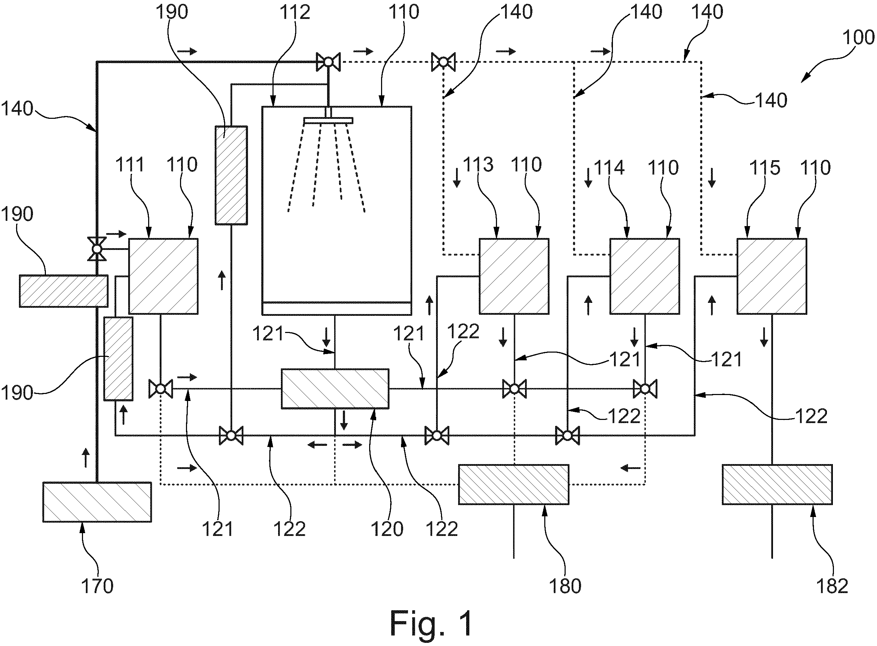

Figur 1 zeigt eine schematische Darstellung eines Systems zur Wasseraufbereitung für einen in einem Freizeitfahrzeug angeordneten Wasserkreislauf gemäß einer Ausführungsform der Erfindung.

Figur 1 zeigt ein System 100 zur Wasseraufbereitung für einen in einem Freizeitfahrzeug angeordneten Wasserkreislauf 140.

Das System 100 weist mehrere im Wasserkreislauf 140 angeordnete Wasserverbraucher 110, eine im Wasserkreislauf 140 angeordnete Wasseraufbereitungsvorrichtung 120 sowie einen Frischwassertank 170 zur Versorgung des Wasserkreislaufs 140 mit Frischwasser auf. Hierbei ist der Frischwassertank 170 mit dem Wasserkreislauf 140 über ein nicht dargestelltes Ventil verbindbar.

Die im Wasserkreislauf 140 angeordnete Wasserverbraucher 110 sind ein Wasch-Spülbecken 111, eine Dusche 112, eine Waschmaschine 113, eine Geschirrspülmaschine 114 sowie eine Toilette 115. Ein Volumen des Wassers in dem Wasserkreislauf 140 beträgt sechs Liter.

Das Brauchwasser der Wasserverbraucher 110 Wasch-Spülbecken 111, Dusche 112, Waschmaschine 113 und Geschirrspülmaschine 114 kann über jeweils eine Leitung 121 zur Wasseraufbereitungsvorrichtung 120 geführt werden. Das Brauchwasser des Wasserverbrauchers 110 Toilette 115, auch Fäkalwasser genannt, wird in einen Fäkaltank 182 bzw. Schwarzwassertank entsorgt und nicht der Wasseraufbereitungsvorrichtung 120 zugeführt.

Die Wasseraufbereitungsvorrichtung 120 des Systems 100 ist so ausgeführt und eingerichtet, dass das Brauchwasser der Wasserverbraucher 110 Wasch-Spülbecken 111, Dusche 112, Waschmaschine 113, Geschirrspülmaschine 114 von der Wasseraufbereitungsvorrichtung 120 so aufbereitet wird, dass es für eine erneute Verwendung in dem Wasserkreislauf 140 verwendbar ist. Dabei können die Leitungen so geschaltet werden, dass jeweils ein einzelner Wasserverbraucher 110 oder auch mehrere gleichzeitig mit derselben Wasseraufbereitungsvorrichtung 120 im Kreislaufbetrieb genutzt werden können.

Das von Wasseraufbereitungsvorrichtung 120 aufbearbeitete Wasser kann über Leitungen 122 dem Wasch-Spülbecken 111, der Dusche 112, der Waschmaschine 113, der Geschirrspülmaschine 114 oder der Toilette 115 zur erneuten Verwendung zugeführt werden. Bei der Zuleitung zu dem Wasch-Spülbecken 111 und/oder der Dusche 112 kann eine Heizeinheit 190 jeweils vorgesehen sein, um das Wasser zu erwärmen und als Warmwasser zur Verfügung zu stellen.

Alternativ oder zusätzlich kann das Brauchwasser der Wasserverbraucher 110 Wasch-Spülbecken 111, Dusche 112, Waschmaschine 113, Geschirrspülmaschine 114 auch ohne Aufbereitung für die Toilettenspülung verwendet werden. Dies kann entweder durch nicht dargestellte Leitungen oder dadurch realisiert werden, dass die Wasseraufbereitungsvorrichtung 120 das entsprechende Wasser unverarbeitet weiterleitet.

Die Wasseraufbereitungsvorrichtung 120 weist je nach Ausführung mindestens einen Filter auf. Der mindestens eine Filter kann mindestens einer der folgenden Filter oder eine Kombination aus diesen sein: ein Aktivkohlefilter, ein Vorfilter, eine elektrochemische Einheit oder ein Ultrafeinfilter.

Nach Wunsch eines Benutzers des Systems 100 kann das Brauchwasser eines Wasserverbrauchers 110 oder das von der Wasseraufbereitungsvorrichtung 120 aufbereitete Wasser aus dem Wasserkreislauf 140 entfernt werden. In diesem Fall wird das Wasser in einen Grauwassertank 180 entsorgt. Dies findet z.B. dann Verwendung, wenn eine Person nicht mit dem aufbereiteten Wasser einer anderen Person duschen will. Eine Entsorgung des Wassers kann zum Beispiel per Knopfdruck erfolgen.

Das System 100 ist so ausgeführt und eingerichtet, dass ein Verlust des Volumens des Wassers des Wasserkreislaufs 140 durch den Frischwassertank 170 ausgeglichen wird. Hierbei können vorgesehen sein, dass, falls in dem Frischwassertank 170 weniger Wasser ist, als zum Auffüllen des Wasserkreislauf 140 benötigt wird, eine Warnung, zum Beispiel an einem Bordcomputer, ausgeben wird. Im Zulauf des Wassers aus dem Frischwassertank 170 kann ebenfalls zusätzlich eine Heizeinheit 190 vorgesehen sein, um das Wasser auf eine gewünschte Temperatur zu erwärmen.

Es ist somit möglich, dass die Benutzer des Freizeitfahrzeugs mit einem Gesamtwasserbedarf von 6 Litern sich mehrfach waschen, duschen, Wäsche waschen und Geschirr spülen, sei es von Hand oder mit der Spülmaschine. Dieser Vorgang kann über mehrere Tage wiederholt werden, so dass ein Tagesverbrauch oder sogar ein Wochenverbrauch auf 6 Liter Wasser reduziert werden kann.

## Patentansprüche

1. System (100) zur Wasseraufbereitung für einen in einem Freizeitfahrzeug angeordneten Wasserkreislauf (140) aufweisend:
mindestens einen im Wasserkreislauf (140) angeordneten Wasserverbraucher (110); und
eine im Wasserkreislauf (140) angeordnete Wasseraufbereitungsvorrichtung (120);
**dadurch gekennzeichnet, dass**
die Wasseraufbereitungsvorrichtung (120) des Systems (100) so ausgeführt und eingerichtet ist, dass das Brauchwasser des mindestens einen Wasserverbrauchers (110) von der Wasseraufbereitungsvorrichtung (120) so aufbereitet wird, dass es für eine erneute Verwendung in dem Wasserkreislauf (140) verwendbar ist.

2. System (100) nach Anspruch 1,
**dadurch gekennzeichnet, dass**
ein Volumen des Wassers in dem Wasserkreislauf (140) kleiner als 8 Liter ist.

3. System (100) nach Anspruch 1 oder 2,
**dadurch gekennzeichnet, dass**
die Wasseraufbereitungsvorrichtung (120) so ausgeführt und eingerichtet ist, dass das Brauchwasser des mindestens einen Wasserverbrauchers (110) von der Wasseraufbereitungsvorrichtung (120) so aufbereitet wird, dass eine Wasserqualität des Wassers im Wasserkreislauf (140) bei einem Dauerbetrieb des Systems (100) besser als ein vorgegebener Wert ist.

4. System (100) nach einem der vorangegangenen Ansprüche,
**dadurch gekennzeichnet, dass**
die Wasseraufbereitungsvorrichtung (120) mindestens einen Filter aufweist.

5. System (100) nach dem vorangegangenen Anspruch,
**dadurch gekennzeichnet, dass**
der mindestens eine Filter ausgewählt ist aus einer Liste bestehend aus einem oder mehreren aus: ein Aktivkohlefilter, ein Vorfilter, eine elektrochemische Einheit und ein Ultrafeinfilter.

6. System (100) nach einem der vorangegangenen Ansprüche,
**dadurch gekennzeichnet, dass**
der mindestens eine Wasserverbraucher (110) ausgewählt ist aus einer Liste bestehend aus: Geschirrspülmaschine (114), Waschmaschine (113), Dusche (112), Waschbecken (111), Spülbecken (111) und Wasserhahn.

7. System (100) nach einem der vorangegangenen Ansprüche, **ferner aufweisend:**
einen Frischwassertank (170) zur Versorgung des Wasserkreislaufs (140) mit Frischwasser, wobei der Frischwassertank (170) mit dem Wasserkreislauf (140) über ein Ventil verbindbar ist.

8. System (100) nach einem der vorangegangenen Ansprüche,
**dadurch gekennzeichnet, dass**
das System (100) so ausgeführt und eingerichtet ist, dass ein Verlust des Volumens des Wassers des Wasserkreislaufs (140) ausgeglichen wird.

9. System (100) nach einem der vorangegangenen Ansprüche,
**dadurch gekennzeichnet, dass**
das System (100) so ausgeführt und eingerichtet ist, dass das von der Wasseraufbereitungsvorrichtung (120) aufbereitete Wasser aus dem Wasserkreislauf (140) entfernbar ist.

10. System (100) nach einem der vorangegangenen Ansprüche,
**dadurch gekennzeichnet, dass**
das Wasser über die Wasseraufbereitungsvorrichtung (120) in Wasserkreisläufe (140) mit verschiedenen Wasserverbrauchern (110) jeweils getrennt geleitet werden kann.

11. Freizeitfahrzeug mit einem System (100) zur Wasseraufbereitung für einen in einem Freizeitfahrzeug angeordneten Wasserkreislauf (140) nach einem der vorangegangenen Ansprüche.
